# EUROPÄISCHE PATENTSCHRIFT

(11) **EP 4 208 650 B1**
(45) Veröffentlichungstag und Bekanntmachung des Hinweises auf die Patenterteilung: **08.07.2026**
(21) Anmeldenummer: 20772216.6
(22) Anmeldetag: 03.09.2020
(51) Int. Cl.: F04D 29/047, F16C 33/20, A47L 15/42, F04D 13/06

(54) **VERFAHREN ZUR HERSTELLUNG EINER GLEITLAGERBUCHSE UND GLEITLAGERBUCHSE**
METHOD FOR PRODUCING A PLAIN BEARING BUSHING, AND PLAIN BEARING BUSHING
PROCÉDÉ DE FABRICATION D'UN COUSSINET LISSE ET COUSSINET LISSE

(43) Veröffentlichungstag der Anmeldung: 12.07.2023
(73) Patentinhaber: Schunk Kohlenstofftechnik GmbH, 35452 Heuchelheim (DE)
(72) Erfinder: RINN, Guenter, 35633 Lahnau (DE); VOORMANN, Hauke, 35440 Linden (DE)
(74) Vertreter: advotec.
(86) Internationale Anmeldenummer: PCT/EP2020/074639
(87) Internationale Veröffentlichungsnummer: WO 2022/048753

(56) Entgegenhaltungen:
- EP-A1- 2 759 728
- WO-A1-2018/062357
- DE-A1- 102006 045 781
- DE-U1- 202011 100 921
- DE-U1- 9 200 510

## Beschreibung

Die Erfindung betrifft ein Verfahren zur Herstellung einer Gleitlagerbuchse, eine Gleitlagerbuchse für eine Pumpe sowie eine Pumpe für eine Spülmaschine, insbesondere Geschirrspülmaschine oder dergleichen, wobei die Gleitlagerbuchse aus einem mit Kohlenstoff gefüllten, polymeren Werkstoff ausgebildet wird, wobei der Werkstoff ein thermoplastisches Polymer aufweist.

Gleitlagerbuchsen sind aus dem Stand der Technik hinlänglich bekannt und werden regelmäßig auch zur Lagerung von Pumpenwellen, beispielsweise von Umwälzpumpen in Heizkreisläufen oder auch Spülmaschinen, eingesetzt. Solche Gleitlagerbuchsen sind z.B. aus den Dokumenten DE102006045781A1, DE9200510U1 und WO2018062357A1 bekannt. Insbesondere ist bei derartigen Pumpen ein Pumpenrad innerhalb eines Pumpengehäuses drehbar gelagert. Die Gleitlager in der Pumpe bzw. dem Pumpengehäuse werden von dem zu fördernden Medium bzw. der betreffenden Flüssigkeit umspült bzw. gelangen mit dieser in Kontakt. Um eine lange Lebensdauer der Pumpe zu gewährleisten, werden besondere Anforderungen an eine Gleitpaarung einer Pumpenwelle und der Gleitlager gestellt. Die Welle kann beispielsweise aus einem korrosionsbeständigen Stahl oder einem keramischen Werkstoff bestehen. Bei Pumpen für Heizkreisläufe oder Spülmaschinen sind in dem zu fördernden Wasser Schmutz oder korrosiv wirkende Stoffe enthalten. Insbesondere Spülmaschinenwässer sind stark mit Schmutz belastet, der sich im Wesentlichen aus Essensresten zusammensetzt. Dieses Wasser weist darüber hinaus einen hohen Salzgehalt, alkalisches Waschmittel und Polieradditive auf. Ein Werkstoff des Gleitlagers ist daher einem entsprechenden Verschleiß, welcher eine Lebensdauer und Geräuschemissionen der Pumpe beeinflussen kann, ausgesetzt.

So ist es bekannt, derartige Gleitlagerbuchsen für Pumpen aus mit Graphit gefüllten Polytetrafluorethylen herzustellen. Ein derartiger Verbundwerkstoff wird durch Mischung von Polytetrafluorethylen mit Graphit in einem Nassmischverfahren mit anschließender Trocknung hergestellt. Eine Formgebung erfolgt beispielsweise durch Trockenpressen des Werkstoffs und Sintern bei ca. 300°C. Eine Nachbearbeitung zur Erzielung der gewünschten Toleranzen ist ebenfalls erforderlich. Dieses Herstellungsverfahren ermöglicht eine Füllung des Polytetrafluorethylen mit bis zu 25 Vol.-% Graphit. Die guten Gleiteigenschaften des Polytetrafluorethylen, die Beständigkeit gegenüber Chemikalien, die Nachgiebigkeit gegenüber harten Schmutzpartikeln und die hohe Temperaturbelastbarkeit ermöglichen die Ausbildung langlebiger und geräuscharmer Gleitlagerbuchsen. Eine Herstellung einer derartigen Gleitlagerbuchse ist jedoch verhältnismäßig aufwendig und damit kostenintensiv.

Der vorliegenden Erfindung liegt daher die Aufgabe zugrunde, ein Verfahren zur Herstellung einer Gleitlagerbuchse, eine Gleitlagerbuchse und eine Pumpe vorzuschlagen, das bzw. die eine kostengünstige Herstellung ermöglicht.

Diese Aufgabe wird durch ein Verfahren mit den Merkmalen des Anspruchs 1, eine Gleitlagerbuchse mit den Merkmalen des Anspruchs 11, eine Pumpe mit den Merkmalen des Anspruchs 12 und eine Verwendung eines Werkstoffs mit den Merkmalen des Anspruchs 17 gelöst.

Bei dem erfindungsgemäßen Verfahren zur Herstellung einer Gleitlagerbuchse für eine Pumpe, insbesondere Umwälzpumpe oder dergleichen, wird die Gleitlagerbuchse aus einem mit Kohlenstoff gefüllten polymeren Werkstoff ausgebildet, wobei der Werkstoff ein schmelzbares thermoplastisches Polymer aufweist, wobei der Werkstoff einen Schmelzpunkt von ≥ 240 °C, vorzugsweise von ≥ 280 °C, aufweist, wobei der Werkstoff einen Anteil an dem thermoplastischen Polymer von > 30 Vol.-% bis 65 Vol.-% und einen Anteil an dem Kohlenstoff von > 35 Vol.-% bis 70 Vol.-% aufweist, wobei die Gleitlagerbuchse mittels eines Spritzgießverfahrens ausgebildet wird.

Demnach wird zunächst der Werkstoff bzw. eine Formmasse durch eine Mischung von Kohlenstoff und dem thermoplastischen Polymer in den angegebenen Anteilen ausgebildet und nachfolgend die Gleitlagerbuchse mittels des Spritzgießverfahrens durch Einspritzen des Werkstoffs in eine Form hergestellt. Dies wird insbesondere dadurch möglich, dass ein schmelzbares thermoplastisches Polymer mit der angegebenen Schmelztemperatur verwendet wird. Im Unterschied zu Polytetrafluorethylen, welches nicht schmelzbar ist, wird so die Ausführung des Spritzgießverfahrens möglich, wodurch eine Reihe von Arbeitsschritten eingespart werden kann. Insbesondere kann auf das Nassmischverfahren, eine Trocknung, ein Sintern und eine Nachbearbeitung verzichtet werden. Gleichfalls ist es möglich, einen Anteil an Kohlenstoff an dem Werkstoff wesentlich zu erhöhen und den Anteil an dem thermoplastischen Polymer zu vermindern, wodurch ebenfalls Kosten eingespart werden können. Weitere erzielbare Vorteile sind ein geringerer Schwund beim Spritzgießen und damit eine bessere Maßhaltigkeit sowie ein geringerer thermischer Ausdehnungskoeffizient und eine höhere Wärmeleitfähigkeit der Gleitlagerbuchse. Darüber hinaus können eventuell fehlerhaft hergestellte Gleitlagerbuchsen als Rezyklat mit dem Spritzgießverfahren wiederverwendet werden. Insgesamt wird die Gleitlagerbuchse durch das erfindungsgemäße Verfahren wesentlich einfacher und damit kostengünstiger herstellbar.

Der Werkstoff kann vorteilhaft einen Anteil an dem thermoplastischen Polymer von 40 Vol.-% bis < 50 Vol.-% und einen Anteil an dem Kohlenstoff von > 50 Vol.-% bis 60 Vol.-% aufweisen. Wie sich herausgestellt hat, ist das Verfahren mit diesen Anteilen an dem thermoplastischen Polymer und dem Kohlenstoff besonders effizient durchführbar. Als Kohlenstoff kann Graphit, ein überwiegend kohlenstoffhaltiger Feststoff, Petrolkoks oder eine Mischung dieser Stoffe verwendet werden. Der betreffende Stoff kann dann zunächst in Pulverform vorliegen, was eine Mischung mit dem thermoplastischen Polymer wesentlich erleichtert. Insbesondere durch den vergleichsweise hohen Anteil des Kohlenstoffs an dem Werkstoff kann eine besonders chemikalienbeständige und temperaturstabile Gleitlagerbuchse ausgebildet werden. Weiter kann durch den hohen Anteil an Kohlenstoff ein besonders günstiger Reibungskoeffizient der Gleitlagerbuchse erzielt werden.

Erfindungsgemäß ist der Werkstoff frei von Polytetrafluorethylen. Insbesondere kann der Werkstoff ausschließlich aus Kohlenstoff und dem schmelzbaren thermoplastischen Polymer bestehen. Prinzipiell ist es jedoch auch möglich, dem Werkstoff weitere Polymere oder sonstige Additive beizumischen, die in einem Spritzgießverfahren verarbeitet werden können.

Insbesondere kann der polymere Werkstoff ein thermoplastisches Fluorpolymer aufweisen. Das thermoplastische Fluorpolymer kann vorteilhafte Eigenschaften für eine Verwendung des Werkstoffs als Gleitlagerbuchse aufweisen.

Besonders vorteilhaft kann als polymerer Werkstoff, vorzugsweiseausschließlich, Ethylen-Tetrafluorethylen-Copolymer, oder Ethylen-Tetrafluorethylen-Copolymer und ein Hochtemperatur-Thermoplast, vorzugsweise Polyphenylensulfid, Polyetheretherketon, Polyethersulfon und/oder Polyamidimid, verwendet werden. Derartige polymere Werkstoffe oder Werkstoffmischungen mit Ethylen-Tetrafluorethylen-Copolymer eignen sich zur Verarbeitung in einem Spritzgießverfahren, da sie schmelzbar sind. Insbesondere Ethylen-Tetrafluorethylen-Copolymer kann besonders gut bis zu einer Temperatur von 150°C mechanisch belastet werden (Hochtemperatur-Thermoplast). Darüber hinaus weist dieses Fluorpolymer sehr gute Gleiteigenschaften und eine sehr gute Chemikalienbeständigkeit auf.

Alternativ kann als polymerer Werkstoff, vorzugsweise ausschließlich, ein Hochtemperatur-Thermoplast, bevorzugt Polyphenylensulfid, Polyetheretherketon, Polyethersulfon oder Polyamidimid, verwendet werden. Derartige polymere Werkstoffe eignen sich ebenfalls zur Verarbeitung in einem Spritzgießverfahren und weisen vorteilhafte Eigenschaften für eine Verwendung des Werkstoffs als Gleitlagerbuchse auf
Im Rahmen des Verfahrens kann zunächst eine Formmasse des Werkstoffs durch Aufschmelzen des thermoplastischen Polymers und Mischen mit Kohlenstoff ausgebildet werden, wobei die Formmasse nachfolgend mittels einer Spritzgießmaschine in eine Spritzgießform eingebracht werden kann. Ein beispielsweise homogenes Mischen mit Kohlenstoff kann einfach in einem Extruder erfolgen. Durch die Verwendung einer Spritzgießmaschine wird es zudem möglich, auch vergleichsweise lange Gleitlagerbuchsen mit nahezu beliebigen Geometrien auszubilden. Im Gegensatz dazu ist bei einer Formgebung durch Trockenpressen die Herstellung einer langen Gleitlagerbuchse nicht ohne weiteres möglich, da Wandreibungseffekte eine gleichmäßige Verdichtung verhindern und damit zu inhomogenen Werkstoffeigenschaften über eine Länge der Gleitlagerbuchse führen.

Eine Compoundierung bzw. Aufbereitung des Werkstoffs kann in einem Schneckenextruder, vorzugsweise einem Doppelschnecken-Schneckenextruder erfolgen. Dies erlaubt unter anderem auch eine Rückführung von Ausschussteilen in einen Materialfluss.

Weiter kann vorgesehen sein, dass die Gleitlagerbuchse zumindest an den Lagerflächen spanend bearbeitet wird. Zwar kann durch die Anwendung des Spritzgießverfahrens bereits eine besonders maßhaltige Gleitlagerbuchse erhalten werden, jedoch kann durch eine spanende Bearbeitung eine noch genauere Anpassung an eine Welle bzw. Achse eines Pumpenrades erfolgen. Unter anderem ist es auch möglich, die Gleitlagerbuchse nach dem Spritzgießen durch beispielsweise Trowalisieren zu bearbeiten. Eine Oberfläche der Gleitlagerbuchse kann dann vorteilhaft als Gleitfläche ausgebildet werden.

Die Gleitlagerbuchse kann plastifiziert oder granuliert bzw. zerkleinert und der so hergestellte Werkstoff zu einer erneuten Herstellung einer Gleitlagerbuchse mit dem erfindungsgemäßen Verfahren verwendet werden. Beispielsweise können im Rahmen des erfindungsgemäßen Verfahrens hergestellte Gleitlagerbuchsen aufgrund von Maßabweichungen oder anderen Herstellungsfehlern als Ausschuss klassifiziert werden. Diese Gleitlagerbuchsen können dann plastifiziert oder granuliert bzw. zerkleinert und nachfolgend plastifiziert werden, wobei dieser Werkstoff dann als Rezyklat in dem Spritzgießverfahren verarbeitet werden kann. Dadurch können nicht unerhebliche Mengen an Werkstoff eingespart werden.

Die erfindungsgemäße Gleitlagerbuchse für eine Pumpe, insbesondere Umwälzpumpe oder dergleichen, ist aus einem mit Kohlenstoff gefüllten, polymeren Werkstoff ausgebildet, wobei der Werkstoff ein schmelzbares thermoplastisches Polymer aufweist, wobei der Werkstoff einen Schmelzpunkt von ≥ 240 °C, vorzugsweise von ≥ 280 °C, aufweist, wobei der Werkstoff einen Anteil an dem thermoplastischen Polymer von > 30 Vol.-% bis 65 Vol.-% und einen Anteil an dem Kohlenstoff von > 35 Vol.-% bis 70 Vol.-% aufweist, wobei die Gleitlagerbuchse mittels eines Spritzgießverfahrens ausgebildet ist. Zu den Vorteilen der erfindungsgemäßen Gleitlagerbuchse wird auf die Vorteilsbeschreibung des erfindungsgemäßen Verfahrens verwiesen. Insbesondere entstehen bei der Herstellung der Gleitlagerbuchse im Spritzgießverfahren keine Dichteunterschiede, wie sie beim Trockenpressen und Sintern von Werkstoffen auftreten können. Weitere vorteilhafte Ausführungsformen einer Gleitlagerbuchse ergeben sich aus den Merkmalsbeschreibungen der auf den Anspruch 1 rückbezogenen Unteransprüche.

Die erfindungsgemäße Pumpe für eine Spülmaschine, insbesondere Geschirrspülmaschine oder dergleichen, ist mit einem Elektromotor zum Antrieb eines Pumpenrads der Pumpe ausgebildet, wobei der Elektromotor aus einem Stator, einem Rotor und einer Welle ausgebildet ist, wobei der Rotor und das Pumpenrad an der Welle angebracht sind, wobei die Welle zwischenliegend dem Rotor und dem Pumpenrad an einem Gleitlager der Pumpe drehbar gelagert ist, wobei das Gleitlager mit einer erfindungsgemäßen Gleitlagerbuchse ausgebildet ist.

Die Gleitlagerbuchse kann derart an der Welle angeordnet sein, dass die Gleitlagerbuchse mit einer von der Pumpe förderbaren Flüssigkeit in Kontakt gelangen kann. Beispielsweise kann die Gleitlagerbuchse so in einem Pumpengehäuse verbaut sein, dass die Flüssigkeit zwangsläufig mit der Gleitlagerbuchse in Kontakt gelangt bzw. diese umspült. Dabei kann vorgesehen sein, dass das Pumpenrad der Pumpe unmittelbar benachbart der Gleitlagerbuchse auf der Welle angeordnet ist.

Weiter kann vorgesehen sein, dass die Pumpe alleine eine Gleitlagerbuchse aufweist. Prinzipiell kann eine Lagerung der Welle mit zwei oder mehr Gleitlagerbuchsen erfolgen. Um Bauraum einzusparen, kann jedoch auch nur eine einzige Gleitlagerbuchse vorgesehen sein, die vergleichsweise lang ausgebildet ist. Das heißt eine Länge der Gleitlagerbuchse kann so bemessen sein, dass ein Kippen der Welle vermieden wird und ein ausreichend sichere Lagerung der Welle möglich ist.

Vorteilhaft kann der Elektromotor als ein Spaltrohrmotor ausgebildet sein. Dadurch wird eine vollständige Abdichtung des Rotors gegenüber einer zu fördernden Flüssigkeit möglich, was ein Umspülen des Rotors mit der Flüssigkeit erlaubt.

Der Rotor kann aus einem Dauermagnet oder einer Kurzschlusswicklung ausgebildet sein, wobei eine an der Welle angebrachte Anlaufscheibe der Pumpe an einer axialen Seitenfläche der Gleitlagerbuchse anliegen kann. Die Anlaufscheibe erlaubt dann eine axiale Lagerung des Rotors und kann gegebenenfalls Axialkräfte des Pumpenrades aufnehmen. Die Anlaufscheibe kann auf die Welle aufgesteckt sein oder die Welle kann die Anlaufscheibe ausbilden. Vorzugsweise kann die Anlaufscheibe aus dem Material der Welle oder auch aus einem anderen Material ausgebildet sein.

Weitere vorteilhafte Ausführungsformen einer Pumpe ergeben sich aus den Merkmalsbeschreibungen der auf den Anspruch 1 rückbezogenen Unteransprüche.

Erfindungsgemäß wird ein mit Kohlenstoff gefüllter, polymerer Werkstoff mit einem Schmelzpunkt von ≥ 240 °C, vorzugsweise von ≥ 280 °C, und mit einem Anteil an einem thermoplastischen Polymer von > 30 Vol.-% bis 65 Vol.-% und einem Anteil an dem Kohlenstoff von > 35 Vol.-% bis 70 Vol.-% zur Ausbildung einer Gleitlagerbuchse für eine Pumpe in einem Spritzgießverfahren verwendet. Weitere vorteilhafte Ausführungsformen einer Verwendung dieses Werkstoffs ergeben sich aus den Merkmalsbeschreibungen der auf den Anspruch 1 und den Anspruch 11 rückbezogenen Unteransprüchen.

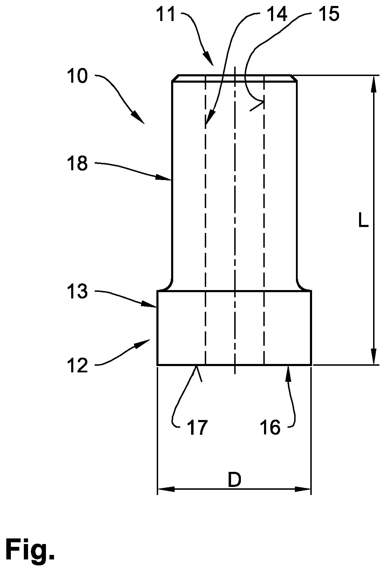

Nachfolgend wird eine Ausführungsform der Erfindung unter Bezugnahme auf die Figur erläutert.

Die **Figur** zeigt eine Seitenansicht einer Gleitlagerbuchse 10. Die Gleitlagerbuchse 10 ist rotationssymmetrisch ausgebildet und weist eine Durchgangsöffnung 11 zur Aufnahme einer Welle einer Pumpe auf. Weiter ist an einem Ende 12 der Gleitlagerbuchse 10 ein Bund 13 ausgebildet. Eine Innenfläche 14 der Durchgangsöffnung 11 bildet eine radiale Gleitfläche 15 und eine Seitenfläche 16 des Bunds 13 eine axiale Gleitfläche 17 für die hier nicht dargestellte Welle bzw. eine an der Welle befindliche Anlaufscheibe aus. Die Gleitlagerbuchse 10 kann über eine Außenfläche 18 in einen Lagersitz eines hier nicht dargestellten Pumpengehäuses einer Pumpe eingepresst werden. Insbesondere ist ein Verhältnis einer Länge L zu einem Durchmesser D der Gleitlagerbuchse 10 ≥ 2:1 gewählt. Dies wird dadurch möglich, dass die Gleitlagerbuchse 10 mittels eines Spritzgießverfahrens ausgebildet wird.

Bei der Herstellung der Gleitlagerbuchse 10 wird ein mit Kohlenstoff gefüllter, polymerer Werkstoff verwendet, wobei der Werkstoff ein schmelzbares thermoplastisches Polymer, insbesondere Fluorpolymer, aufweist. Zunächst wird eine homogene Formmasse mit einem Anteil an dem thermoplastischen Polymer von > 30 Vol.-% bis 65 Vol.-% und einem Anteil an dem Kohlenstoff von > 35 Vol.-% bis 70 Vol.-% mit beispielsweise einem Extruder ausgebildet. Mittels einer Spritzgießmaschine wird die Formmasse mit einem Schmelzpunkt von ≥ 240 °C in eine Spritzgießform eingebracht und so die dargestellte Gleitlagerbuchse 10 ausgebildet.

## Patentansprüche

1. Verfahren zur Herstellung einer Gleitlagerbuchse (10) für eine Pumpe, insbesondere Umwälzpumpe oder dergleichen, wobei die Gleitlagerbuchse aus einem mit Kohlenstoff gefüllten, polymeren Werkstoff ausgebildet wird, wobei der Werkstoff ein thermoplastisches Polymer aufweist,
**dadurch gekennzeichnet,**
**dass** das thermoplastische Polymer schmelzbar ist und einen Schmelzpunkt von ≥ 240 °C, vorzugsweise von ≥ 280 °C, aufweist, wobei der Werkstoff einen Anteil an dem thermoplastischen Polymer von > 30 Vol.-% bis 65 Vol.-.% und einen Anteil an dem Kohlenstoff von > 35 Vol.-% bis 70 Vol.-% aufweist, wobei die Gleitlagerbuchse mittels eines Spritzgießverfahrens ausgebildet wird, wobei der Werkstoff frei von Polytetrafluorethylen ist.

2. Verfahren nach Anspruch 1,
**dadurch gekennzeichnet,**
**dass** der Werkstoff einen Anteil an dem thermoplastischen Polymer von 40 Vol.-% bis < 50 Vol.-.% und einen Anteil an dem Kohlenstoff von > 50 Vol.-% bis 60 Vol.-% aufweist.

3. Verfahren nach Anspruch 1 oder 2,
**dadurch gekennzeichnet,**
**dass** als Kohlenstoff, Grafit, ein überwiegend kohlenstoffhaltiger Feststoff, Petrolkoks oder eine Mischung dieser Stoffe verwendet wird.

4. Verfahren nach einem der vorangehenden Ansprüche,
**dadurch gekennzeichnet,**
**dass** der polymere Werkstoff ein thermoplastisches Fluorpolymer aufweist.

5. Verfahren nach Anspruch 4,
**dadurch gekennzeichnet,**
**dass** als polymerer Werkstoff, vorzugsweise ausschließlich, Ethylen-Tetrafluorethylen-Copolymer, oder Ethylen-Tetrafluorethylen-Copolymer und ein Hochtemperatur-Thermoplast, vorzugsweise Polyphenylensulfid, Polyetheretherketon, Polyethersulfon und/oder Polyamidimid, verwendet wird.

6. Verfahren nach einem der Ansprüche 1 bis 3,
**dadurch gekennzeichnet,**
**dass** als polymerer Werkstoff, vorzugsweise ausschließlich, ein Hochtemperatur-Thermoplast, bevorzugt Polyphenylensulfid, Polyetheretherketon, Polyethersulfon oder Polyamidimid, verwendet wird.

7. Verfahren nach einem der vorangehenden Ansprüche,
**dadurch gekennzeichnet,**
**dass** eine Formmasse des Werkstoffs durch Aufschmelzen des thermoplastischen Polymers und Mischen mit Kohlenstoff ausgebildet wird, wobei die Formmasse nachfolgend mittels einer Spritzgießmaschine in eine Spritzgießform eingebracht wird.

8. Verfahren nach Anspruch 7,
**dadurch gekennzeichnet,**
**dass** eine Compoundierung des Werkstoffs in einem Schneckenextruder, vorzugsweise Doppelschneckenextruder, erfolgt.

9. Verfahren nach einem der vorangehenden Ansprüche,
**dadurch gekennzeichnet,**
**dass** die Gleitlagerbuchse (10) zumindest an Lagerflächen (15, 17) spanend bearbeitet wird.

10. Verfahren nach einem der vorangehenden Ansprüche,
**dadurch gekennzeichnet,**
**dass** die Gleitlagerbuchse (10) plastifiziert oder granuliert und der so hergestellte Werkstoff zu einer erneuten Herstellung einer Gleitlagerbuchse mit dem Verfahren nach einem der vorangehenden Ansprüche verwendet wird.

11. Gleitlagerbuchse (10) für eine Pumpe, insbesondere Umwälzpumpe oder dergleichen, wobei die Gleitlagerbuchse aus einem mit Kohlenstoff gefüllten, polymeren Werkstoff ausgebildet ist, wobei der Werkstoff ein thermoplastisches Polymer aufweist,
**dadurch gekennzeichnet,**
**dass** das thermoplastische Polymer schmelzbar ist und einen Schmelzpunkt von ≥ 240 °C, vorzugsweise von ≥ 280 °C, aufweist, wobei der Werkstoff einen Anteil an dem thermoplastischen Polymer von > 30 Vol.-% bis 65 Vol.-.% und einen Anteil an dem Kohlenstoff von > 35 Vol.-% bis 70 Vol.-% aufweist, wobei die Gleitlagerbuchse mittels eines Spritzgießverfahrens ausgebildet ist, wobei der Werkstoff frei von Polytetrafluorethylen ist.

12. Pumpe für eine Spülmaschine, insbesondere Geschirrspülmaschine oder dergleichen, mit einem Elektromotor zum Antrieb eines Pumpenrades der Pumpe, wobei der Elektromotor aus einem Stator, einem Rotor und einer Welle ausgebildet ist, wobei der Rotor und das Pumpenrad an der Welle angebracht sind, wobei die Welle zwischenliegend dem Rotor und dem Pumpenrad an einem Gleitlager der Pumpe drehbar gelagert ist, wobei das Gleitlager mit einer Gleitlagerbuchse (10) nach Anspruch 11 ausgebildet ist.

13. Pumpe nach Anspruch 12,
**dadurch gekennzeichnet,**
**dass** die Gleitlagerbuchse (10) derart an der Welle angeordnet ist, dass die Gleitlagerbuchse mit einer von der Pumpe förderbaren Flüssigkeit in Kontakt gelangt.

14. Pumpe nach Anspruch 12 oder 13,
**dadurch gekennzeichnet,**
**dass** die Pumpe alleine eine Gleitlagerbuchse (10) aufweist.

15. Pumpe nach einem der Ansprüche 12 bis 14,
**dadurch gekennzeichnet,**
**dass** der Elektromotor als ein Spaltrohrmotor ausgebildet ist.

16. Pumpe nach einem der Ansprüche 12 bis 15,
**dadurch gekennzeichnet,**
**dass** der Rotor aus einem Dauermagnet oder einer Kurzschlusswicklung ausgebildet ist, wobei eine an der Welle angebrachte Anlaufscheibe der Pumpe an einer axialen Seitenfläche (17) der Gleitlagerbuchse (10) anliegt.

17. Verwendung eines mit Kohlenstoff gefüllten, polymeren Werkstoffs mit einem Schmelzpunkt von ≥ 240 °C, vorzugsweise von ≥ 280 °C, und, mit einen Anteil an einem thermoplastischen Polymer von > 30 Vol.-% bis 65 Vol.-.% und einen Anteil an dem Kohlenstoff von > 35 Vol.-% bis 70 Vol.-%, zur Ausbildung einer Gleitlagerbuchse (10) für eine Pumpe in einem Spritzgießverfahren, wobei der Werkstoff frei von Polytetrafluorethylen ist.

## Claims

1. A method for producing a sliding bearing bush (10) for a pump, in particular a circulator pump or the like, the sliding bearing bush being made of a polymer material filled with carbon, the material having a thermoplastic polymer,
**characterized in that**
the thermoplastic polymer is fusible and has a melting point of ≥ 240 °C, preferably ≥ 280 °C, the material having a portion of thermoplastic polymer of > 30 vol% to 65 vol% and a portion of carbon of > 35 vol% to 70 vol%, the sliding bearing bush being made by means of an injection molding method, the material being free of polytetrafluoroethylene.

2. The method according to claim 1,
**characterized in that**
the material has a portion of thermoplastic polymer of 40 vol% to < 50 vol% and a portion of carbon of > 50 vol% to 60 vol%.

3. The method according to claim 1 or 2,
**characterized in that**
graphite, a mostly carbonaceous solid material, petroleum coke or a mixture of these materials is used as carbon.

4. The method according to any one of the preceding claims,
**characterized in that**
the polymer material has a thermoplastic fluoropolymer.

5. The method according to claim 4,
**characterized in that**
ethylene tetrafluoroethylene or ethylene tetrafluoroethylene and a high-temperature thermoplastic, preferably polyphenylene sulfide, polyether ether ketone, polyether sulphone and/or polyamide-imide, is used, preferably exclusively, as the polymer material.

6. The method according to any one of the claims 1 to 3,
**characterized in that**
a high-temperature thermoplastic, preferably polyphenylene sulfide, polyether ether ketone, polyether sulphone or polyamide-imide, is used, preferably exclusively, as the polymer material.

7. The method according to any one of the preceding claims,
**characterized in that**
a molding material of the material is formed by fusing the thermoplastic polymer and mixing it with carbon, the molding material subsequently being introduced into an injection mold by means of an injection-molding machine.

8. The method according to claim 7,
**characterized in that**
the material is compounded in a screw extruder, preferably a twin screw extruder.

9. The method according to any one of the preceding claims,
**characterized in that**
at least bearing surfaces (15, 17) of the sliding bearing bush (10) are machined.

10. The method according to any one of the preceding claims,
**characterized in that**
the sliding bearing bush (10) is plasticized or granulated and the thus produced material is used for a renewed production of a sliding bearing bush using the method according to the preceding claims.

11. A sliding bearing bush (10) for a pump, in particular a circulator pump or the like, the sliding bearing bush being made of a polymer material filled with carbon, the material having a thermoplastic polymer,
**characterized in that**
the thermoplastic polymer is fusible and has a melting point of ≥ 240 °C, preferably ≥ 280 °C, the material having a portion of thermoplastic polymer of > 30 vol% to 65 vol% and a portion of carbon of > 35 vol% to 70 vol%, the sliding bearing bush being made by means of an injection molding method, the material being free of polytetrafluoroethylene.

12. A pump for a rinsing machine, in particular a dishwasher or the like, having an electric motor for driving a pump wheel of the pump, the electric motor being made of a stator, a rotor and a shaft, the rotor and the pump wheel being affixed on the shaft, the shaft being rotatably mounted on a sliding bearing of the pump between the rotor and the pump wheel, the sliding bearing having a sliding bearing bush (10) according to claim 11.

13. The pump according to claim 12,
**characterized in that**
the sliding bearing bush (10) is disposed in such a manner on the shaft that the sliding bearing bush comes into contact with a liquid conveyable by the pump.

14. The pump according to claim 12 or 13,
**characterized in that**
only the pump has a sliding bearing bush (10).

15. The pump according to any one of the claims 12 to 14,
**characterized in that**
the electric motor is a canned motor.

16. The pump according to any one of the claims 12 to 15,
**characterized in that**
the rotor is made of a permanent magnet and a shading coil, a starting disk of the pump mounted on the shaft resting against an axial lateral surface (17) of the sliding bearing bush (10).

17. A use of a polymeric material filled with carbon and having a melting point of ≥ 240 °C, preferably ≥ 280 °C, and having a content of thermoplastic polymer of > 30 vol% to 65 vol% and a portion of carbon of > 35 vol% to 70 vol% for forming a sliding bearing bush (10) for a pump using an injection-molding method, the material being free of polytetrafluoroethylene.

## Revendications

1. Procédé de fabrication d'une bague de palier lisse (10) pour une pompe, notamment un circulateur ou similaire, la bague de palier lisse étant réalisée en un matériau polymère chargé de carbone, le matériau comprenant un polymère thermoplastique,
**caractérisé en ce que**
le polymère thermoplastique est fusible et a un point de fusion de ≥ 240 °C, de préférence de ≥ 280 °C, le matériau ayant une proportion de polymère thermoplastique de > 30 % en volume à 65 % en volume et une proportion de carbone de > 35 % en volume à 70 % en volume, la bague de palier lisse étant fabriquée au moyen d'un procédé de moulage par injection, le matériau étant exempt de polytétrafluoroéthylène.

2. Procédé selon la revendication 1,
**caractérisé en ce que**
le matériau a une proportion de polymère thermoplastique de 40 % en volume à < 50 % en volume et une proportion de carbone de > 50 % en volume à 60 % en volume.

3. Procédé selon la revendication 1 ou la revendication 2,
**caractérisé en ce que**
du graphite, d'un matériau solide principalement carburé, du coke de pétrole ou un mélange de ces matériaux est utilisé comme carbone.

4. Procédé selon l'une quelconque des revendications précédentes,
**caractérisé en ce que**
le matériau polymère a un fluoropolymère thermoplastique.

5. Procédé selon la revendication 4,
**caractérisé en ce que**
de l'éthylène-tétrafluoroéthylène ou de l'éthylène-tétrafluoroéthylène et un thermoplastique à haute température, de préférence du polysulfure de phénylène, de la polyétheréthercétone, de la polyéthersulfone et/ou du polyamide-imide, est utilisé, de préférence exclusivement, comme matériau polymère.

6. Procédé selon l'une quelconque des revendications 1 à 3,
**caractérisé en ce**
**qu'**un thermoplastique à haute température, de préférence du polysulfure de phénylène, de la polyétheréthercétone, de la polyéthersulfone ou du polyamide-imide, est utilisé, de préférence exclusivement, comme matériau polymère.

7. Procédé selon l'une quelconque des revendications précédentes,
**caractérisé en ce**
**qu'**un matériau à mouler du matériau est formé en fusionnant le polymère thermoplastique et en le mélangeant avec du carbone, le matériau à mouler étant ensuite introduit dans un moule par injection au moyen d'une machine de moulage par injection.

8. Procédé selon la revendication 7,
**caractérisé en ce que**
le matériau est compoundé dans une extrudeuse monovis, de préférence une extrudeuse bi-vis.

9. Procédé selon l'une quelconque des revendications précédentes,
**caractérisé en ce**
**qu'**au moins les faces de palier (15, 17) de la bague de palier lisse (10) sont usinées.

10. Procédé selon l'une quelconque des revendications précédentes,
**caractérisé en ce que**
la bague de palier lisse (10) est plastifiée ou granulée et le matériau ainsi produit est utilisé pour une nouvelle fabrication d'une bague de palier lisse selon le procédé selon les revendications précédentes.

11. Bague de palier lisse (10) pour une pompe, notamment un circulateur ou similaire, la bague de palier lisse étant réalisée en un matériau polymère chargé de carbone, le matériau ayant un polymère thermoplastique,
**caractérisée en ce que**
le polymère thermoplastique est fusible et a un point de fusion de ≥ 240 °C, de préférence de ≥ 280 °C, le matériau ayant une proportion de polymère thermoplastique de > 30 % en volume à 65 % en volume et une proportion de carbone de > 35 % en volume à 70 % en volume, la bague de palier lisse étant fabriquée au moyen d'un procédé de moulage par injection, le matériau étant exempt de polytétrafluoroéthylène.

12. Pompe pour une machine à laver, notamment une machine à laver la vaisselle ou similaire, ayant un moteur électrique destiné à entraîner une roue de la pompe, le moteur électrique étant réalisé en un stator, en un rotor et en un arbre, le rotor et la roue de pompe étant fixés sur l'arbre, l'arbre étant monté de manière rotative sur un palier lisse de la pompe entre le rotor et la roue de pompe, le palier lisse ayant une bague de palier lisse (10) selon la revendication 11.

13. Pompe selon la revendication 12,
**caractérisée en ce que**
la bague de palier lisse (10) est disposée de telle manière sur l'arbre que la bague de palier lisse entre en contact avec un liquide pouvant être transporté par la pompe.

14. Pompe selon la revendication 12 ou la revendication 13,
**caractérisée en ce que**
seule la pompe a une bague de palier lisse (10).

15. Pompe selon l'une quelconque des revendications 12 à 14,
**caractérisée en ce que**
le moteur électrique est une pompe à rotor noyé.

16. Pompe selon l'une quelconque des revendications 12 à 15,
**caractérisée en ce que**
le rotor est réalisé en un aimant permanent ou en une spire de Frager, un disque de démarrage de la pompe monté sur l'arbre reposant contre une surface latérale axiale (17) de la bague de palier lisse (10).

17. Utilisation d'un matériau polymère chargé de carbone et ayant un point de fusion de ≥ 240 °C, de préférence ≥ 280 °C, et ayant une proportion de polymère thermoplastique de > 30 % en volume à 65 % en volume et une proportion de carbone de > 35 % en volume à 70 % en volume pour former une bague de palier lisse (10) pour une pompe par un procédé de moulage par injection, le matériau étant exempt de polytétrafluoroéthylène.
